# EUROPÄISCHE PATENTSCHRIFT

(11) **EP 1 863 697 B1**
(45) Veröffentlichungstag und Bekanntmachung des Hinweises auf die Patenterteilung: **07.10.2009**
(21) Anmeldenummer: 06706876.7
(22) Anmeldetag: 11.02.2006
(51) Int. Cl.: B62D 25/20, B62D 25/02

(54) **KRAFTFAHRZEUG MIT EINEM SEITENSCHWELLER**
MOTOR VEHICLE HAVING A SIDE SILL
AUTOMOBILE MUNIE D'UNE JUPE LATERALE

(30) Priorität: 25.02.2005 DE 102005009162
(43) Veröffentlichungstag der Anmeldung: 12.12.2007
(73) Patentinhaber: Bayerische Motoren Werke Aktiengesellschaft, 80809 München (DE)
(72) Erfinder: RILL, Roland, 80807 München (DE)
(86) Internationale Anmeldenummer: PCT/EP2006/001261
(87) Internationale Veröffentlichungsnummer: WO 2006/089652

(56) Entgegenhaltungen:
- EP-A- 0 919 454
- EP-A- 1 170 198
- DE-A1- 10 128 989
- US-A- 5 002 333
- PATENT ABSTRACTS OF JAPAN Bd. 2000, Nr. 11, 3. Januar 2001 (2001-01-03) -& JP 2000 219153 A (MAZDA MOTOR CORP), 8. August 2000 (2000-08-08)

## Beschreibung

Die Erfindung betrifft ein Kraftfahrzeug mit einem Seitenschweller nach dem Oberbegriff des Patentanspruchs 1. Dokument US 5,002,333 beschreibt ein solches Kraftfahrzeug.

Es ist allgemein bekannt, einen Seitenschweller eines Kraftfahrzeugs in Schatenbauweise mit einer Innen- und einen Außenschale zu bauen. Die Außenschale wird dabei aus Kostengründen häufig einteilig mit einer Seitenwand des Kraftfahrzeugs ausgeführt. Die Seitenwand erstreckt sich üblicherweise vom Seitenschweller bis zum Dachseitenrahmen und zumindest über den gesamten seitlichen Türausschnitt des Kraftfahrzeugs.

Zur Gewichtsreduzierung und zur Erhöhung der Steifigkeit kommen neuerdings vermehrt höherfeste Stahlbleche im Karosseriebau zum Einsatz. Höherfeste Stahlbleche ermöglichen allerdings nur eine geringere Umformung als konventionelle Stahlbleche bevor sie ihre Streckgrenze erreichen. Beim Tiefziehen eines höherfesten Stahlblechs wird bereits bei vergleichsweise geringen Umformwegen die Streckgrenze erreicht. Bei einer Verformung über die Streckgrenze hinaus zerreißt das höherfeste Stahlblech. Daher war es bis vor einigen Jahren nicht möglich, Seitenwände mit integrierter Außenschale des Seitenschwellers aus einem höherfesten Stahlblech herzustellen, da die zulässigen Umformwege zu klein sind.

Aus der DE 101 28 989 A1 ist eine Lösung bekannt, wie eine Seitenwand einteilig mit einer Außenschale eines Seitenschwellers aus einem höherfesten Stahlblech ausgeführt werden kann: Dazu geht die Seitenwand im Bereich mindestens einer Fahrzeugsäule ohne Stufensprung in den angrenzenden Seitenschweller über. Durch den Entfall des Stufensprungs und damit dem Entfall des freien Überspannens des Stahlblechs während des Ziehvorgangs wird das Stahlblech wesentlich weniger belastet. Es können daher Stahlbleche mit einer größeren Streckgrenze verwendet werden.

Aufgabe der Erfindung ist es, ein Kraftfahrzeug mit einem Seitenschweller in Schalenbauweise zu schaffen, der teilweise durch eine Seitenwand gebildet wird, die aus einem höherfesten Stahlblech bestehen kann.

Diese Aufgabe wird mit einem Kraftfahrzeug mit einem Seitenschweller mit den Merkmalen des Patentanspruchs 1 gelöst.

Erfindungsgemäß weist ein Kraftfahrzeug einen Seitenschweller in Blechschalenbauweise mit zumindest einer Innen- und einer Außenschale auf, die über einen unteren und einen oberen Flansch miteinander verbunden sind. Die Außenschale wird durch den unteren Abschnitt einer Seitenwand gebildet, an den zur Verlängerung nach unten ein Außenblech angebunden ist, sodass im unteren Flansch die Innenschale und das Außenblech, und im oberen Flansch die Innenschale und die Seitenwand miteinander verbunden sind.

Die erforderliche Ziehtiefe einer Seitenwand mit integrierter Außenschale eines Seitenschwellers wird wesentlich bestimmt durch die Breite des Seitenschwellers. Durch die Aufteilung der Außenschale des Seitenschwellers auf die Seitenwand und ein separates Außenblech sind für die Seitenwand unabhängig von der Form und Breite des Seitenschwellers nur mehr wesentlich geringere Ziehtiefen erforderlich. Die Form und Breite des Seitenschwellers beeinflusst im wesentlichen nur die Form und Ziehtiefe des Außenblechs. Dadurch kann die Seitenwand unabhängig vom Design des Seitenschwellers geringe Ziehtiefen von beispielsweise weniger als 85 mm aufweisen. Dies ermöglicht die Verwendung von Stahlblechen mit einer hohen Werkstoffgüte für die Seitenwand mit einer Streckgrenze Rp02 von beispielsweise 160 MPa oder höher. Die Seitenwand ist aufgrund der geringeren Ziehtiefe so viel einfacher herstellbar, dass sogar die Blechdicke der Seitenwand reduziert werden kann. So sind beispielsweise Blechdicken von 0,7 mm und weniger realisierbar. Die Materialgüte und Dicke des Außenblechs kann unabhängig von der Seitenwand funktional ausgelegt werden. Insgesamt ermöglicht die Aufteilung der Außenschale des Seitenschwellers auf die Seitenwand und das separate Außenblech eine größere Designflexibilität. So wird die Breite des Seitenschwellers nicht mehr durch die Herstellbarkeit begrenzt und der Seitenschweller kann lokale Einzüge aufweisen.

Die Seitenwand und das Außenblech bilden einen Überlappungsbereich als Verbindungsflansch. Zur Verbindung der Seitenwand mit dem Außenblech eignen sich besonders mehrere Punktschweißverbindungen.

Günstigerweise ist der Seitenschweller auf der sichtbaren Fahrzeugaußenseite mit einer Blende verkleidet. Dadurch muss das Außenblech keine ansprechenden Sichtflächen in entsprechender Oberflächengüte aufweisen. Auch ist der Verbindungsflansch zwischen der Seitenwand und dem Außenblech nicht mehr sichtbar und vor Schmutz- und Spritzwassereinwirkungen geschützt. Die Blende kann beispielsweise als Kunststoffbauteil ausgeführt sein.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: einen Querschnitt durch einen Seitenschweller einer Kraftfahrzeug- karosserie und
- Fig. 2: eine perspektivische Ansicht einer Seitenwand der Kraftfahrzeugkaros- serie und eines Außenblechs, das im unteren Bereich an die Seiten- wand anbindbar ist.

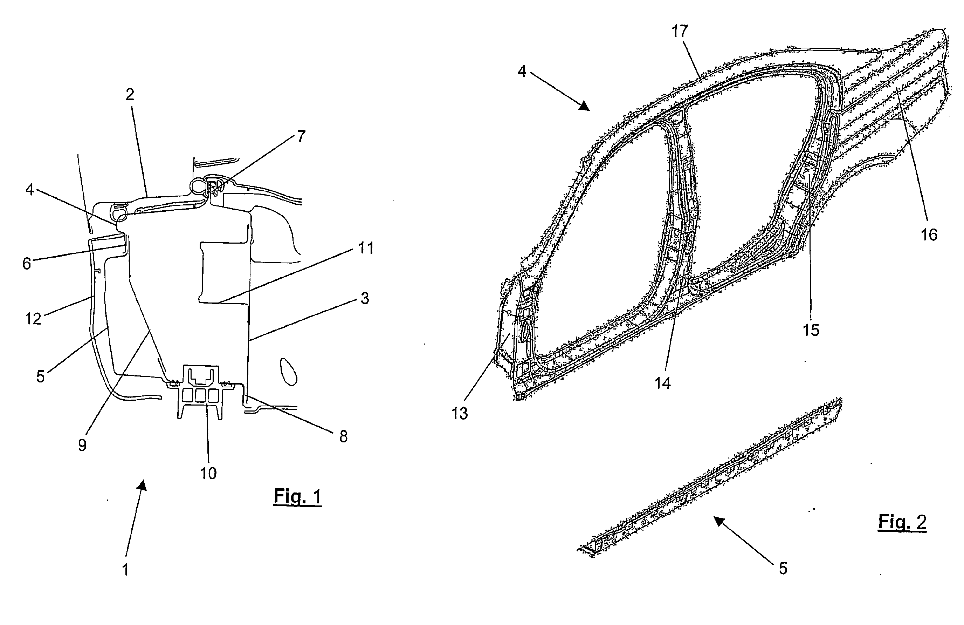

In Fig. 1 ist ein Schnitt durch einen Seitenschweller 1 eines Personenkraftwagens im Bereich einer Seitentür 2 gezeigt. Der Seitenschweller 1 ist in Schalenbauweise aus einer Innenschale 3 und einer Außenschale aufgebaut. Die Außenschale wird gebildet durch den unteren Bereich einer Seitenwand 4 der Fahrzeugkarosserie und einem Außenblech 5. Wie in Fig. 2 dargestellt erstreckt sich die Seitenwand 4 in Längsrichtung von einer A-Säule 13 über die B- und C-Säule 14 und 15 hinaus und bildet zugleich einen hinteren Kotflügel 16 des Personenkraftwagens. In der Höhe erstreckt sich die Seitenwand vom Bereich des Seitenschwellers 1 bis zum Dachseitenrahmen 17. Beim Seitenschweller 1 sind die Seitenwand 4 und das Außenblech 5 - wie in Fig. 1 erkennbar - über einen Verbindungsflansch 6 im unteren Bereich der Seitenwand 4 über Punktschweißverbindungen miteinander verbunden und bilden so die Außenschale. Die Innenschale 3 und die Außenschale 4, 5 sind über einen oberen Flansch 7 und einen unteren Flansch 8 miteinander verbunden. Im oberen Flansch 7 ist die Seitenwand 4 mit der Innenschale 3 verbunden, während im unteren Flansch 8 das Außenblech 5 mit der Innenschale 3 verbunden ist. Auf der Unterseite des Seitenschwellers 1 befindet sich im vorderen und im hinteren Bereich jeweils eine Aussparung im Außenblech 5, in die eine Wagenheberaufnahme 10 eingesetzt ist. Um die über die Wagenheberaufnahme 10 beim Aufbocken des Fahrzeugs in den Seitenschweller 1 eingeleiteten Kräfte aufnehmen zu können, ist das Außenblech 5 im Bereich der Wagenheberaufnahme 10 mit einem zweiteiligen Verstärkungsblech 9 versteift, das einerseits im unteren Flansch 8 mit dem Außenblech 5 und mit der Innenschale 3 und andererseits in dem Verbindungsflansch 6 mit dem Außenblech 5 verbunden ist. Zwischen der Wagenheberaufnahme 10 und dem Verbindungsflansch 6 ist das Verstärkungsblech 9 zum Außenblech 5 beabstandet. Zudem weist das Verstärkungsblech 9 zur Gewichtsreduzierung mehrere Ausnehmungen auf. Auf der Innenschale 3 ist auf der der Außenschale 4, 5 zugewandten Seite zur Versteifung ein sich in Längsrichtung des Seitenschwellers 1 erstreckendes Zusatzblech 11 angebracht, das mit seinem oberen und seinem unteren Randbereich mit der Innenschale 3 verbunden ist und dazwischen zur Innenschale 3 beabstandet ist. Der von der Fahrzeugaußenseite sichtbare Teil des Seitenschwellers 1 ist mit einer Blende 12 aus Kunststoff verkleidet.

Gegenüber einer bekannten Seitenwand, in die die Außenschale eines Seitenschwellers vollständig integriert ist, ist für die dargestellte Seitenwand 4 nur eine wesentlich geringere Ziehtiefe erforderlich. Die notwendige Ziehtiefe der bekannten Seitenwand wird maßgeblich durch die Breite und Form des Seitenschwellers bestimmt. Durch die erfindungsgemäße Aufteilung der Außenschale in die Seitenwand 4 einerseits und die Außenschale 5 andererseits wird die erforderliche Ziehtiefe der Seitenwand 4 wesentlich reduziert. Die Breite und Form des Seitenschwellers 1 beeinflusst fast ausschließlich die Form, Dicke und Materialgüte des Außenblechs 5. Aufgrund der geringeren Ziehtiefe der Seitenwand 4 kann diese aus einem höherfesten Stahlblech mit Streckgrenzen von 160 MPa oder mehr hergestellt werden. Dadurch kann wiederum die Blechdicke der Seitenwand 4 auf beispielsweise 0,7 mm reduziert werden. Dennoch ergeben sich für die Gestaltung des Seitenschwellers 1 keinerlei herstelltechnische Limitierungen. Die Materialgüte und Blechdicke des Außenblechs 5 können unabhängig von der Seitenwand 4 festgelegt werden. Die Anforderungen an die Oberflächengüte des Außenblechs 5 sind gering, da das Außenblech 5 nicht sichtbar ist, sondern am Fahrzeug durch die Blende 12 verdeckt ist. Zudem kann das gleiche Außenblech 5 kommunal bei verschiedenen Karosserievarianten, wie beispielsweise bei einer Limousine und bei einem Fahrzeug der Kombinationsbauart, verwendet werden. Zudem kann das Außenblech 5 als Vormontagegruppe mit dem Verstärkungsblech 9 verbunden werden, das ebenfalls bei mehreren Karosserievarianten gleich sein kann.

Der erfindungsgemäße Seitenschweller 1 ermöglicht also eine große Freiheit bei der Formgebung des Seitenschwellers. Die Seitenwand 4 kann dennoch aus einem höherfesten Stahlblech bestehen, sodass das Gewicht der Karosserie des Personenkraftwagens klein gehalten werden kann. Die Steifigkeitsanforderungen an den Seitenschweller 1 können durch eine geeignete Materialwahl für das Außenblech 5 leicht erfüllt werden.

## Patentansprüche

1. Kraftfahrzeug mit einem Seitenschweller (1), der in Blechschalenbauweise zumindest eine Innenschale (3) und eine Außenschale (4, 5) aufweist, die über einen oberen und einen unteren Flansch (7 und 8) miteinander verbunden sind, wobei die Außenschale (4, 5) gebildet wird durch den unteren Abschnitt einer Seitenwand (4), an die zur Verlängerung nach unten ein Außenblech (5) angebunden ist, sodass im unteren Flansch (8) die Innenschale (3) und das Außenblech (5), und im oberen Flansch (7) die Innenschale (3) und die Seitenwand (4) miteinander verbunden sind, **dadurch gekennzeichnet, dass** die Seitenwand (4) und das Außenblech (5) einen Überlappungsbereich als Verbindungsflansch (6) bilden.

2. Kraftfahrzeug nach Anspruch 1, **dadurch gekennzeichnet, dass** die Seitenwand (4) und das Außenblech (5) über mehrere Punktschweißverbindungen miteinander verbunden sind.

3. Kraftfahrzeug nach einem der vorhergehenden Ansprüche, **dadurch gekennzeichnet, dass** ein zusätzliches, sich in Längsrichtung des Seitenschwellers (1) erstreckendes Verstärkungsblech (9) zwischen Innenschale (3) und Außenschale (4, 5) im Seitenschweller (1) angebunden ist, das einerseits im unteren Flansch (8) mit dem Außenblech (5) und mit der Innenschale (3) und andererseits in dem Verbindungsflansch (6) mit dem Außenblech (5) und der Seitenwand (4) verbunden und zwischen den Anbindungsbereichen zum Außenblech (5) beabstandet ist.

4. Kraftfahrzeug nach einem der vorhergehenden Ansprüche, **dadurch gekennzeichnet, dass** auf der der Außenschale (4, 5) zugewandten Seite der Innenschale (3) zur Versteifung ein sich in Längsrichtung des Seitenschwellers (1) erstreckendes Zusatzblech (11) angebracht ist, das mit seinem oberen und seinem unteren Randbereich mit der Innenschale (3) verbunden und dazwischen zur Innenschale (3) beabstandet ist.

5. Kraftfahrzeug nach einem der vorhergehenden Ansprüche, **dadurch gekennzeichnet, dass** der Seitenschweller (1) auf der sichtbaren Fahrzeugaußenseite mit einer Blende (12) verkleidet ist.

6. Kraftfahrzeug nach einem der vorhergehenden Ansprüche, **dadurch gekennzeichnet, dass** die Seitenwand (4) aus einem höherfesten Stahlblech besteht.

## Claims

1. A motor vehicle with a side sill (1) which, in a sheet metal shell method of construction, has at least one inner shell (3) and one outer shell (4, 5), which are connected to one another by means of an upper and a lower flange (7 and 8), wherein the outer shell (4, 5) is formed by the lower portion of a side wall (4), to which an outer panel (5) is connected for downward extension, so that, in the lower flange (8), the inner shell (3) and the outer panel (5) are connected to one another, and in the upper flange (7), the inner shell (3) and the side wall (4) are connected to one another, **characterised in that** the side wall (4) and the outer panel (5) form an overlap region as the connecting flange (6).

2. A motor vehicle according to claim 1, **characterised in that** the side wall (4) and the outer panel (5) are connected to one another by means of a plurality of spot welding connections.

3. A motor vehicle according to any one of the preceding claims, **characterised in that** an additional reinforcement panel (9) extending in the longitudinal direction of the side sill (1) is attached between the inner shell (3) and outer shell (4, 5) in the side sill (1) and is connected, on the one hand, in the lower flange (8) to the outer panel (5) and to the inner shell (3) and, on the other hand, is connected in the connecting flange (6) to the outer panel (5) and the side wall (4) and, between the attachment regions, is spaced apart with respect to the outer panel (5).

4. A motor vehicle according to any one of the preceding claims, **characterised in that** attached on the side of the inner shell (3) facing the outer shell (4, 5), for reinforcement, is an additional panel (11) which extends in the longitudinal direction of the side sill (1) and is connected by its upper and its lower edge region to the inner shell (3) and, in between, is spaced apart with respect to the inner shell (3).

5. A motor vehicle according to any one of the preceding claims, **characterised in that** the side sill (1) is covered with a cover (12) on the visible outer side of the vehicle.

6. A motor vehicle according to any one of the preceding claims, **characterised in that** the side wall (4) consists of a high strength steel sheet.

## Revendications

1. Véhicule automobile équipé d'un seuil latéral de portière (1), réalisé en construction de coques de tôle, comportant au moins une coque intérieure (3) et une coque extérieure (4, 5) reliées l'une à l'autre par une bride supérieure et une bride inférieure (7 et 8),
la coque extérieure (4, 5) étant formée par le segment inférieur d'une paroi latérale (4) à laquelle est reliée une tôle extérieure (5) pour la prolonger vers le bas de façon que la coque intérieure (3) et la coque extérieure (5) soient reliées dans la bride inférieure (8), et la coque intérieure (3) et la paroi latérale (4) soient reliées dans la bride supérieure (7),
**caractérisé en ce que**
la paroi latérale (4) et la tôle extérieure (5) forment une zone de chevauchement comme bride de liaison (6).

2. Véhicule automobile selon la revendication 1,
**caractérisé en ce que**
la paroi latérale (4) et la tôle extérieure (5) sont reliées par plusieurs points de soudure.

3. Véhicule automobile selon les revendications précédentes,
**caractérisé en ce qu'**
une tôle de renforcement (9), supplémentaire, s'étendant dans la direction longitudinale du seuil de porte latérale (1), est fixée entre la coque intérieure (3) et la coque extérieure (4, 5) dans le seuil de porte (1), en étant d'un côté reliée à la tôle extérieure (5) et à la coque intérieure (3) dans la bride inférieure (8), et de l'autre côté, dans la bride de liaison (6) avec la tôle extérieure (5) et la paroi latérale (4), et en étant écartée de la tôle extérieure (5) entre les zones de fixation.

4. Véhicule automobile selon les revendications précédentes,
**caractérisé en ce que**
sur le côté de la coque intérieure (3), tourné vers la coque extérieure (4, 5), il est prévu une tôle complémentaire (11) s'étendant dans la direction longitudinale du seuil latéral de porte (1), cette tôle complémentaire étant reliée à la coque intérieure (3) par sa zone supérieure de bord et sa zone inférieure de bord, en étant écartée de la coque intérieure (3) entre les zones de bord.

5. Véhicule automobile selon les revendications précédentes,
**caractérisé en ce que**
le seuil de porte latérale (1) est habillé d'une jupe (12) sur le côté extérieur visible du véhicule.

6. Véhicule automobile selon les revendications précédentes,
**caractérisé en ce que**
la paroi latérale (4) est réalisée dans une tôle d'acier très résistant.
